# EUROPÄISCHE PATENTANMELDUNG

(11) **EP 4 261 075 A1**
(43) Veröffentlichungstag der Anmeldung: **18.10.2023**
(21) Anmeldenummer: 23161673.1
(22) Anmeldetag: 14.03.2023
(51) Int. Cl.: B60L 3/04, H02H 3/087, B60R 16/03, B60R 16/00

(54) **HAUPTSCHALTER EINES BORDNETZES EINES FAHRZEUGS**

(30) Priorität: 25.03.2022 DE 102022202988
(71) Anmelder: Ellenberger & Poensgen GmbH, 90518 Altdorf (DE)
(72) Erfinder: BISCHOF, Bernd, 91244 Reichenschwand (DE); ENGEWALD, Manuel, 90411 Nürnberg (DE); HANNES, Stefan, 92318 Neumarkt (DE); MIKLIS, Markus, 90592 Schwarzenbruck (DE); NEUBERT, Christian, 90513 Zirndorf- Weiherhof (DE); SCHWARZ, Matthias, 90559 Burgthann (DE)
(74) Vertreter: FDST Patentanwälte

(57) **Zusammenfassung**

Die Erfindung betrifft einen Hauptschalter (12) eines Bordnetzes (10) eines Fahrzeugs (2), insbesondere Landmaschine, mit einem ersten Hauptstrompfad (30), in den ein erster Schalter (34) eingebracht ist, und mit einem zweiten Hauptstrompfad (32). Der Hauptschalter (12) umfasst eine Steuereinheit (38), und dem ersten Hauptstrompfad (30) ist ein erster Stromsensor (42) und dem zweiten Hauptstrompfad (32) ein zweiter Stromsensor (44) zugeordnet. Mittels der Steuereinheit (38) ist der erste Schalter (34) in Abhängigkeit einer Abweichung von mittels der beiden Stromsensoren (42, 44) erfassten elektrischen Ströme betätigt.

## Beschreibung

Die Erfindung betrifft einen Hauptschalter eines Bordnetzes eines Fahrzeugs. Das Fahrzeug ist insbesondere landgebunden und beispielsweise ein Nutzkraftwagen oder bevorzugt eine Landmaschine.

Fahrzeuge weisen üblicherweise eine Anzahl an Nebenaggregaten auf, die mittels eines Elektromotors betrieben sind. Ein derartiges Nebenaggregat ist, sofern das Fahrzeug beispielsweise eine Landmaschine oder Baumaschine ist, ein Hydrauliksystem, mittels derer weitere Aktoren angetrieben sind. Mit anderen Worten dient das Nebenaggregat dem Ausführen einer bestimmten Funktion des Fahrzeugs. Auch sind meist sonstige Nebenaggregate vorhanden, die dem Komfort des Benutzers des Kraftfahrzeugs dienen, wie eine Sitzheizung oder ein Heizgebläse. Falls das Fahrzeug als Landmaschine ausgestaltet ist, ist es zudem möglich, von diesem elektrische Energie direkt mittels einer Leitung zu einem damit gekoppelten Anhänger zu leiten, der ein Aggregat aufweist. Das Aggregat wird mittels der elektrischen Energie direkt betrieben, weswegen Verluste reduziert sind.

Die jeweils zum Betrieb erforderliche elektrische Energie wird üblicherweise mittels einer Batterie bereitgestellt, die je nach Ausgestaltung eine Gleichspannung von 12 V, 24 V oder 48 V aufweist. Die Batterie ist mittels eines Generators gespeist, der von einer Verbrennungskraftmaschine des Fahrzeugs angetrieben ist. Wenn für den Betrieb des (Neben-) Aggregats vergleichsweise viel elektrische Energie erforderlich ist, und dieses lediglich bei Betrieb des Fahrzeugs, also wenn die Verbrennungskraftmaschine betrieben wird, betrieben werden soll, ist es möglich, die Batterie wegzulassen bzw. das (Neben-) Aggregat direkt mit dem Generator zu bestromen. Somit sind Herstellungskosten und ein erforderlicher Bauraum reduziert. Um dabei ein Gewicht und auch Herstellungskosten zu reduzieren wird zur Bestromung meist 48 V Gleichstrom verwendet. Somit sind die mit den jeweiligen Leitungen geführten elektrischen Ströme verringert. Jedoch ist aufgrund der erhöhten elektrischen Spannung eine Gefährdung von Personen und/oder anderen Bauteilen nicht ausgeschlossen. Damit hierbei auch nicht stets bei Beginn des Betriebs der Verbrennungskraftmaschine das jeweilige Aggregat betrieben wird, ist es erforderlich, in die Leitung zwischen dem Generator und dem Aggregat einen Hauptschalter einzubringen, mittels dessen ein Energiefluss zwischen dem Generator und dem Aggregat unterbrochen werden kann.

Der Erfindung liegt die Aufgabe zugrunde, einen besonders geeigneten Hauptschalter eines Fahrzeugs anzugeben, wobei insbesondere eine Sicherheit erhöht und eine Montage vereinfacht ist.

Erfindungsgemäß wird diese Aufgabe durch die Merkmale des Anspruchs 1 gelöst. Vorteilhafte Weiterbildungen und Ausgestaltungen sind Gegenstand der Unteransprüche.

Der Hauptschalter ist ein Bestandteil eines Bordnetzes eines Fahrzeugs. Mit anderen Worten ist der Hauptschalter im Montagezustand in das Bordnetz des Fahrzeugs eingebracht. Hierfür ist der Hauptschalter geeignet, insbesondere vorgesehen und eingerichtet. Das Fahrzeug ist dabei beweglich ausgestaltet und folglich mobil. Besonders bevorzugt ist das Fahrzeug ein Kraftfahrzeug, das zweckmäßigerweise landgebunden ist. Hierfür weist das Kraftfahrzeug insbesondere eine Anzahl an Rädern auf, die mittels eines Antriebs angetrieben sind. Das Kraftfahrzeug ist vorzugsweise nicht schienengebundenen ausgestaltet und weist zum Beispiel eine Anzahl an steuerbaren Rädern auf, mittels derer eine Fortbewegungsrichtung des Kraftfahrzeugs eingestellt werden kann. Das Kraftfahrzeug ist insbesondere eine Landmaschine, wie ein Traktor, also ein landwirtschaftliches Zugfahrzeug, ein Mähdrescher, eine Pflanzmaschine oder ein Düngerstreuer. Alternativ hierzu ist das Kraftfahrzeug insbesondere eine Baumaschine, wie ein Bagger, ein Frontlader, ein Muldenkipper, ein Seitenkipper, ein Gabelstapler oder ein sonstiges Nutzfahrzeug, wie ein Lastkraftwagen (Lkw) oder ein Bus. Alternativ hierzu ist das Kraftfahrzeug beispielsweise ein Personenkraftwagen (Pkw). In einer weiteren Alternative ist das Fahrzeug beispielsweise ein Flugzeug oder ein Boot.

Das Bordnetz dient insbesondere dem Führen von elektrischer Energie. Hierfür erstreckt sich das Bordnetz im Montagezustand zweckmäßigerweise zwischen einer elektrischen Energiequelle des Fahrzeugs, wie einer Batterie oder bevorzugt eines Generators, und einem Aggregat. Mit anderen Worten wird die für den Betrieb des Aggregats benötigte elektrische Energie mittels des Bordnetzes zumindest teilweise geführt. Das Aggregat ist dabei beispielsweise ein Bestandteil des Fahrzeugs und insbesondere ein Nebenaggregat, das also insbesondere nicht dem Vortrieb des Fahrzeugs dient, sondern der Durchführung einer weiteren Funktion. Beispielsweise dient das Nebenaggregat der Erhöhung eines Komforts eines Fahrers des Fahrzeugs. Besonders bevorzugt jedoch wird mittels des Nebenaggregats eine bestimmte Funktion durchgeführt, für die das Fahrzeugs vorgesehen ist, insbesondere sofern das Fahrzeugs eine Land- oder Baumaschine ist. Zum Beispiel ist das Nebenaggregat eine Hydraulikpumpe, mittels derer ein Hydraulickreislauf angetrieben ist.

Alternativ hierzu ist das Aggregat bevorzugt ein Bestandteil eines Anhängers, der mit dem Fahrzeug gekoppelt ist. Das Bordnetz umfasst hierbei insbesondere eine Leitung, die zum Beispiel an einer Karosserie des Fahrzeugs angeordnet ist und sich bis zu dem Anhänger erstreckt. Alternativ hierzu ist beispielsweise die Leitung in einen entsprechenden Stecker des Bordnetzes eingesteckt.

Mittels des Bordnetzes wird zweckmäßigerweise bei Betrieb eine elektrische Gleichspannung geführt. Die (elektrische) Gleichspannung weist beispielsweise 12 V oder 24 V auf. Besonders bevorzugt jedoch beträgt die elektrische Gleichspannung 48 V. Der Hauptschalter dient dem Unterbrechen eines elektrischen Stromflusses über das Bordnetz, also insbesondere dem Unterbrechen eines Übertragens von elektrischer Energie. Vorzugsweise ist hierbei der Hauptschalter geeignet, dass an diesem eine elektrische Spannung von 48 V oder zumindest die mittels des Bordnetzes geführte elektrischen Spannung anliegt.

Vorzugsweise ist der Hauptschalter geeignet, insbesondere vorgesehen und eingerichtet, einen Gleichstrom zu tragen. Vorzugsweise ist der Hauptschalter geeignet, zweckmäßigerweise vorgesehen und eingerichtet, einen elektrischen Strom von maximal zwischen 100 A und 1.000 A oder zwischen 200 A und 500 A zutragen. Auf diese Weise ist auch ein Bestromen eines vergleichsweise leistungsstarken Aggregats mittels des Bordnetzes möglich.

Der Hauptschalter weist einen ersten Hauptstrompfad und einen zweiten Hauptstrompfad auf. Zwischen den beiden Hauptstrompfaden liegt hierbei bei Betrieb des Fahrzeugs insbesondere eine elektrische Spannung des Bordnetzes an, die vorzugsweise mittels des Generators oder der Batterie bereitgestellt ist. Insbesondere liegt somit zwischen den beiden Hauptstrompfaden eine elektrische Gleichspannung an, vorzugsweise 48 V. Mittels jedes der Hauptstrompfade wird dabei bei Betrieb, vorzugsweise im Nenn-Betrieb, geeigneterweise ein elektrischer Strom von bis zu 200A oder 250 A oder 100 A geführt. Insbesondere ist jeder Hauptstrompfad in dem Bordnetz derart angeordnet, dass dieser elektrisch dem Generator oder der Batterie, also der elektrischen Energiequelle, direkt nachgeschaltet ist, sodass der Hauptschalter insbesondere als Sicherungsmechanismus dient. Mit anderen Worten ist elektrisch zwischen dem Hauptschalter und der elektrischen Energiequelle kein weiteres Bauteil elektrisch angeordnet, außer beispielsweise eine Leitung oder dergleichen, mittels derer lediglich ein Führen der elektrischen Energie erfolgt. Sofern sich dennoch ein Bauteil zwischen diesen befindet, ist dieses zweckmäßigerweise eine Sicherung.

Der Hauptschalter weist einen ersten Schalter auf, der in den ersten Hauptstrompfad eingebracht ist. Der erste Schalter ist schaltbar ausgestaltet und es ist mittels dessen somit möglich, je nach Einstellung, den ersten Hauptstrompfad zu schließen oder aufzutrennen. Mit anderen Worten ist es möglich, den ersten Schalter, und somit auch den ersten Hauptstrompfad, in den elektrisch leitenden oder den elektrisch nicht leitenden Zustand zu überführen. Der erste Schalter ist beispielsweise ein Relais oder ein Halbleiterschalter, vorzugsweise ein Feldeffekttransistor, wie ein MOSFET, GTO oder IGBT. Alternativ hierzu umfasst der erste Schalter beispielsweise einen oder mehrere derartige Halbleiterschalter und/oder ein Relais, die vorzugsweise geeignet miteinander verschaltet sind, beispielsweise elektrisch in Reihe oder parallel. Somit ist es insbesondere möglich, bei Öffnen des ersten Schalters ein Ausbilden eines etwaigen Lichtbogens zu verhindern oder zumindest dessen Zeitdauer zu verkürzen, wobei ein elektrischer Widerstand im elektrisch leitenden Zustand des ersten Schalters vergleichsweise gering ist. Die verbleibenden Bestandteile des ersten Hauptstrompfad sind beispielsweise mittels einer jeweiligen Stromschiene gebildet, die sich insbesondere auf beiden Seiten des ersten Schalters erstrecken. Vorzugsweise ist der erste Schalter derart ausgestaltet, dass mittels dessen eine galvanisches Trennen des ersten Hauptstrompfads ermöglicht ist.

Der Hauptschalter umfasst ferner eine Steuereinheit. Die Steuereinheit weist beispielsweise mehrere elektrische und/oder elektronische Bauteile auf, die geeignet verschaltet sind, sodass eine Schaltung realisiert ist. Mittels der Steuereinheit ist der erste Schalter betätigt. Beispielsweise wird mittels der Steuereinheit hierfür ein Signal für einen Antrieb erstellt, mittels dessen der erste Schalter betätigt ist. Alternativ weist der erste Schalter den entsprechenden Antrieb auf, der in Abhängigkeit des entsprechenden Signals betätigt wird. In einer weiteren Alternative umfasst die Steuereinheit den Antrieb, und die Betätigung des ersten Schalters umfasst zum Beispiel eine mechanische Betätigung oder eine Bestromung oder das Anliegen einer bestimmten elektrischen Spannung an dem ersten Schalter.

Mittels das Hauptschalters ist es somit möglich, eine Übertragung von elektrischer Energie über das Bordnetz zu unterbrechen und folglich eine Bestromung etwaiger damit elektrisch verbundener Aggregate zu beginnen oder zu beenden. Beispielsweise ist der erste Schalter manuell betätigbar, und der Hauptschalter weist zum Beispiel einen Hebel auf, der mechanisch oder elektrisch mit dem ersten Schalter gekoppelt ist, beispielsweise über die Steuereinheit.

Der Hauptschalter umfasst ferner einen ersten Stromsensor, der dem ersten Strompfad zugeordnet ist. Beispielsweise ist hierbei der erste Stromsensor in den ersten Hauptstrompfad eingebracht, sodass mittels dessen zumindest zeitweise der mittels des ersten Hauptstrompfads geführte elektrische Strom auch geführt wird. Beispielsweise ist der erste Stromsensors nach Art eines Shunts ausgeführt. Alternativ hierzu ist der erste Stromsensor lediglich in Wirkverbindung mit dem ersten Hauptstrompfad, wobei der erste Stromsensor beispielsweise separat von dem ersten Hauptstrompfad und zum Beispiel von diesen beabstandet ist. Auf diese Weise ist eine Sicherheit erhöht. Zweckmäßigerweise umfasst der erste Stromsensor hierfür einen Magnetfeldsensor, zum Beispiel einen Hall-Sensor.

Mittels des ersten Stromsensors werden bei Betrieb Messdaten erstellt, die den mittels des ersten Hauptstrompfads geführten elektrischen Strom charakterisieren. Hierfür ist der erste Stromsensor geeignet, vorzugsweise vorgesehen und eingerichtet. Insbesondere erfolgt mittels der Steuereinheit eine Auswertung dieser Messdaten, sodass mittels des ersten Stromsensors sowie der Steuereinheit der mittels des ersten Hauptstrompfads geführte elektrische Strom erfassbar ist.

Dem zweiten Hauptstrompfad ist ein zweiter Stromsensor des Hauptschalters zugeordnet. Der zweite Stromsensor ist beispielsweise nach Art eines Shunts ausgestaltet und/oder umfasst einen Magnetfeldsensor. Der zweite Stromsensor ist zum Beispiel baugleich zu dem ersten Stromsensor, sodass Gleichteile verwendet werden können. Alternativ ist der zweite Stromsensor unterschiedliche zu diesem ausgestaltet und weist beispielsweise eine andere Konstruktion auf, sodass ein Anpassen auf die jeweiligen Anforderungen verbessert ist. Zumindest ist es mittels des zweiten Stromsensors, insbesondere unter Zuhilfenahme der Steuereinheit, möglich, den mittels des zweiten Hauptstrompfads geführten elektrischen Strom zu erfassen. Hierfür werden mittels des zweiten Stromsensors zweckmäßigerweise bei Betrieb entsprechende Messdaten erstellt, die geeigneterweise mittels der Steuereinheit ausgewertet werden.

Der erste und/oder zweite Stromsensor sind beispielsweise signaltechnisch und/oder elektrisch mit der Steuereinheit gekoppelt. Vorzugsweise werden die beiden Stromsensoren mittels der Steuereinheit betrieben und sind vorzugsweise geeignet mit der Steuereinheit verschaltet.

Mittels der Steuereinheit ist der erste Schalter in Abhängigkeit einer Abweichung der mittels der beiden Stromsensoren erfassten elektrischen Ströme betätigt. Dabei wird mittels der Steuereinheit insbesondere der erste Schalter geöffnet, wenn die Differenz zwischen den beiden (elektrischen) Strömen, also die Abweichung dazwischen, größer als ein bestimmter Grenzwert ist. Der Grenzwert ist beispielsweise absolut und zum Beispiel 0,1 A, 0,5 A oder 1 A. Alternativ hierzu ist der Grenzwert beispielsweise 10 %, 5 %, 2 % oder 1 % des mittels des ersten oder zweiten Hauptstrompfads geführten elektrischen Stroms.

Die Steuereinheit ist für diese Tätigkeit vorgesehen und eingerichtet. Beispielsweise ist die Steuereinheit entsprechend mit den Stromsensoren und dem ersten Schalter verschaltet, und/oder die Steuereinheit weist entsprechende Algorithmen oder Routinen auf. Insbesondere umfasst die Steuereinheit einen Mikroprozessor, der zum Beispiel programmierbar ausgestaltet ist. Vorzugsweise umfasst die Steuereinheit ein Computerprogrammprodukt, das mehrere Befehle umfasst, die bei der Ausführung des Programms durch den Mikroprozessor veranlassen, ein Signal abzugeben, anhand dessen der erste Schalter geöffnet wird, wenn die Abweichung größer als der Grenzwert ist.

Die mittels der beiden Hauptstrompfade geführten elektrischen Ströme unterscheiden sich, wenn in dem Bordnetz Leckstrom vorhanden ist, also wenn beispielsweise eine Leitung des Bordnetzes oder ein stromführendes Teil des Aggregats über einen Kurzschluss mit Erde oder zum Beispiel einem anderen Bordnetz verbunden ist, also wenn ein Isolierfehler vorliegt, beispielsweise des Bordnetzes oder des Aggregats. Da in diesem Fall der erste Schalter betätigt wird, wird die Bestromung und somit auch der Leckstrom unterbrochen, was eine Sicherheit erhöht. Zudem wird auf diese Weise ein Fehlverhalten und/oder weitere Beschädigung des Aggregats ausgeschlossen. Dabei ist lediglich die Montage des Hauptschalters erforderlich, weswegen eine Montage vereinfacht ist.

Besonders bevorzugt wird hierbei mittels der Steuereinheit der erste Schalter ebenfalls betätigt, wenn der mittels des ersten oder zweiten Hauptstrompfads geführte elektrische Strom oberhalb eines jeweiligen weiteren Grenzwerts ist. Bei beispielsweise einem Kurzschluss treten vergleichsweise hohe elektrische Ströme auf. Aufgrund der Betätigung des ersten Schalters in diesem Fall wird die Bestromung und somit auch der Kurzschluss beendet, weswegen auch hier ein Fehlverhalten unterbunden wird. Zudem erfolgt auf diese Weise eine Verhinderung einer thermischen Überbelastung. Zum Beispiel sind die beiden Stromsensoren derart ausgestaltet, dass mittels dieser jeweils der mit dem zugeordneten Hauptstrompfad geführte elektrische Strom erfasst werden kann. Alternativ hierzu bilden die beiden Stromsensoren eine Baueinheit und sind derart miteinander verschaltet, dass lediglich der Differenzstrom, also die Abweichung der mittels der beiden Hauptstrompfade geführten elektrischen Ströme erfasst werden kann.

Besonders bevorzugt weist der Hauptschalter zudem einen Spannungssensor auf, der beispielsweise zwischen den ersten Hauptstrompfad und Masse oder den zweiten Hauptstrompfad und Masse oder besonders bevorzugt zwischen die beiden Hauptstrompfade geschaltet ist. Vorzugsweise ist der erste Schalter mittels der Steuereinheit auch in Abhängigkeit der jeweils erfassten elektrischen Spannung betätigt. Hierbei wird insbesondere der erste Schalter geöffnet, wenn die erfasste elektrische Spannung einen bestimmten zugeordneten Grenzwert überschreitet oder einen bestimmten kritischen Grenzwert unterschreitet, was beispielsweise bei einem Kurzschluss der beiden Hauptstrompfade erfolgt. Somit ist eine Sicherheit weiter erhöht. Vorzugsweise umfasst der Hauptschalter zwei derartige Spannungssensoren, wobei sich zwischen diesen der erste Schalter befindet. Somit ist es möglich, anhand der erfassten elektrischen Spannung den tatsächlichen Schaltzustand des ersten Schalters zu überprüfen.

Zum Beispiel besteht der Hauptschalter lediglich aus dem ersten Schalter, den beiden Hauptstrompfaden und der Steuereinheit. Besonders bevorzugt jedoch weist der Hauptschalter weitere Bestandteile auf, sodass ein Funktionsumfang vergrößert ist. Dabei ist lediglich die Montage des Hauptschalters erforderlich, weswegen eine Montage auch weiterhin vereinfacht ist.

Insbesondere umfasst der Hauptschalter eine Vorladeschaltung, mittels derer der erste Schalter überbrückt ist. Insbesondere ist die Vorladeschaltung mit der Steuereinheit betrieben oder die Vorladeschaltung umfasst eine separate Steuereinheit. Insbesondere ist hierbei die Vorladeschaltung, unabhängig von der konkreten Ausgestaltung der jeweiligen Steuereinheit, derart betrieben, dass vor dem Einschalten des ersten Schalters eine über diesen abfallende elektrische Spannung reduziert wird. Hierfür weist die Vorladeschaltung insbesondere einen weiteren Schalter auf, der beispielsweise mechanisch und/oder elektrisch ausgestaltet ist, und der zum Beispiel unterschiedliche Schalteinheiten umfasst, wie ein Relais und/oder Halbleiterschalter. Mit dem weiteren Schalter ist insbesondere ein Widerstand der Vorladeschaltung elektrisch in Reihe geschaltet.

Insbesondere ist, wenn der Hauptschalter geschlossen werden soll, der weitere Schalter solange elektrisch stromführend geschaltet, bis eine über den (noch geöffneten) ersten Schalter anfallende elektrische Spannung einen bestimmten Wert unterschreitet, beispielsweise 1 V, 0,5 V oder 0 V. Hierfür ist die Vorladeschaltung beispielsweise zeitgesteuert betrieben, oder in Abhängigkeit von der über den ersten Schalter anfallende elektrische Spannung, die zum Beispiel mittels eines entsprechenden Sensors erfasst wird. Erst wenn die über den ersten Schalter anfallende elektrische Spannung den bestimmten Wert unterschreitet, der beispielsweise 1 V beträgt, wird der erste Schalter geschlossen. Somit werden aufgrund Vorladeschaltung Spannungsspitzen und/oder Stromspitzen in dem Bordnetz beim Einschalten des Hauptschalters vermieden, die beispielsweise zu einer Beschädigung der damit elektrisch verbundenen Komponente, wie eines elektrischen Schalters, oder zum Verschweißen eines mechanischen Schalters führen könnten.

Alternativ oder in Kombination hierzu umfasst der Hauptschalter eine Entladungsschaltung, die gegen einen der Hauptstrompfade geführt ist. Hierbei befindet sich die Entladungsschaltung insbesondere auf der der elektrischen Energiequelle abgewandten Seite des ersten Schalters. Die Entladungsschaltung umfasst zweckmäßigerweise einen zusätzlichen Schalter, der zum Beispiel eine oder mehrere Schaltereinheiten umfasst, wie Relais oder Halbleiterschalter, die geeignet verschaltet sind. Zu dem zusätzlichen Schalter ist insbesondere ein Widerstand der Entladungsschaltung elektrisch in Reihe geschaltet.

Nach Öffnen des ersten Schalters wird die in dem Bordnetz weiterhin vorhandene elektrische Energie mittels der Entladungsschaltung abgebaut. Hierfür wird insbesondere der zusätzliche Schalter geschlossen und somit der Hauptstrompfad über den zusätzlichen Schalter sowie vorzugsweise den Widerstand gegen ein weiteres elektrisches Potential geführt, wie Masse. Somit ist nach Öffnen des Hauptschalters zumindest nach Ablauf einer bestimmten Zeitspanne in dem Bordnetz oder zumindest in den daran angeschlossenen Aggregaten keine weitere elektrische Energie vorhanden, sodass eine Sicherheit erhöht ist. Beispielsweise ist die Entladungsschaltung gegen den zweiten Hauptstrompfad oder gegen den ersten Hauptstrompfad geführt. Besonders bevorzugt sind mittels der Entladungsschaltung die beiden Hauptstrompfade miteinander verbunden, sodass bei Betätigung des zusätzlichen Schalters die beiden Hauptstrompfade kurzgeschlossen werden. Vorzugsweise ist die Entladungsschaltung mittels der Steuereinheit oder einer separaten Steuereinheit betätigt. Vorzugsweise wird dabei mittels der Steuereinheit nach Betätigung des ersten Schalters, sodass dieser geöffnet wird, auch die Entladungsschaltung betätigt, sodass insbesondere der zusätzliche Schalter geschlossen wird.

Besonders bevorzugt ist der zweite Hauptstrompfad elektrisch gegen Masse geführt, sodass bei einem Öffnen des ersten Schalters insbesondere an dem Bordnetz dennoch ein elektrisches Potential anliegt, nämlich Masse. Beispielsweise ist dabei lediglich der erste Schalter zum Unterbrechen des elektrischen Energieflusses vorhanden, sodass eine einpolige Trennung erfolgt. Somit ist es möglich, das mittels des Bordnetz betriebene Aggregat gezielt gegen Masse zu führen und somit in einen bestimmten Zustand zu überführen, was eine Sicherheit erhöht.

Alternativ hierzu ist in den zweiten Hauptstrompfad ein zweiter Schalter eingebracht, der mittels der Steuereinheit betätigt ist. Der zweite Schalter ist beispielsweise baugleich zu dem ersten Schalter oder unterschiedlich hierzu. Insbesondere ist der zweite Schalter mittels eines Relais gebildet oder umfasst zumindest dieses. Alternativ oder in Kombination hierzu umfasst der zweite Schalter einen Halbleiterschalter, insbesondere einen Feldeffekttransistor. Der Halbleiterschalter und das Relais sind, sofern diese vorhanden sind, hierbei insbesondere geeignet miteinander verschaltet, beispielsweise elektrisch parallel und/oder in Reihe.

Insbesondere wird der zweite Schalter dann betätigt, wenn auch der erste Schalter betätigt wird. Mit anderen Worten wird auch der zweite Schalter in Abhängigkeit der Abweichung der mittels der beiden Stromsensoren erfassten elektrischen Ströme betätigt. Aufgrund des zweiten Schalters erfolgt somit insbesondere eine zweipolige Trennung des Bordnetzes, weswegen eine Sicherheit erhöht ist. Zum Beispiel erfolgt ein zeitgleiches Betätigen der beiden Schalter. Alternativ hierzu wird der zweite Schalter betätigt, nachdem der erste Schalter bereits betätigt wurde, oder wenn eine Fehlfunktion des ersten Schalters vorliegt. Aufgrund des zweiten Schalters wird das Bordnetz oder zumindest das damit bestromte Aggregat sicher von der elektrischen Energiequelle des Fahrzeugs getrennt, was eine Sicherheit weiter erhöht. In einer weiteren Alternative sind beispielsweise den beiden Schaltern unterschiedliche Grenzwerte zugeordnet, und diese werden erst bei Überschreiten des jeweils zugeordneten Grenzwerts betätigt.

Beispielsweise ist die Steuereinheit über einen der Hauptstrompfade, vorzugsweise beide, bestromt. Insbesondere ist hierbei zwischen die Hauptstrompfade und die Steuereinheit ein Gleichspannungswandler geschaltet. Besonders bevorzugt jedoch weist der Hauptschalter einen weiteren Stromanschluss auf, über den die Steuereinheit bestromt ist. Die Steuereinheit ist somit insbesondere mit dem weiteren Stromanschluss elektrisch kontaktiert und entsprechend mit diesem verschaltet. An dem weiteren Stromanschluss ist insbesondere ein sekundäres Bordnetz des Fahrzeugs im Montagezustand angeschlossen und somit dort anschließbar. Das sekundäre Bordnetz ist geeigneterweise galvanisch von dem Bordnetz getrennt oder weist zumindest ein anderes Spannungsniveau auf. Vorzugsweise ist im Montagezustand an den weiteren Stromanschluss die etwaige Batterie des Fahrzeugs angeschlossen, wohingegen die beiden Hauptstrompfade des Hauptschalters elektrisch direkt mit dem etwaigen Generator des Fahrzeugs verbunden sind. Vorzugsweise wird mittels des sekundären Bordnetzes lediglich eine geringere Energiemenge als mittels des Bordnetzes des Fahrzeugs geführt.

Vorzugsweise wird mittels des sekundären Bordnetzes eine elektrische Gleichspannung von 12 V oder 24 V geführt, sofern mittels des Bordnetzes 48 V geführt wird. Somit ist die für die Realisierung der Steuereinheit erforderliche Spannungsfestigkeit der Komponenten reduziert, weswegen Herstellungskosten reduziert sind. Vorzugsweise ist der erste Schalter derart ausgestaltet, dass dieser lediglich dann, wenn die Steuereinheit bestromt ist, in den elektrisch leitenden Zustand überführt werden kann. Somit wird beispielsweise bei einem Ausfall des sekundären Bordnetzes auch das Bordnetz unterbrochen, weswegen eine Sicherheit erhöht ist.

Beispielsweise ist die Steuereinheit mittel der an dem weiteren Stromanschluss anliegenden elektrischen Spannung bestromt. Besonders bevorzugt jedoch ist zwischen den weiteren Stromanschluss und die Steuereinheit ein Gleichspannungswandler geschaltet. Der Gleichspannungswandler, der auch als DC/DC-Wandler oder -Konverter bezeichnet ist, dient insbesondere der Stabilisierung der an der Steuereinheit anliegenden elektrischen Spannung. Alternativ oder in Kombination hierzu dient der Gleichspannungswandler der Herabsetzung der an dem weiteren Stromanschluss anliegenden elektrischen Spannung auf ein geringeres Spannungsniveau, mittels dessen die Steuereinheit betrieben ist, wie zum Beispiel 5 V. Auf diese Weise ist eine erforderliche Spannungsfestigkeit der Steuereinheit weiter reduziert, weswegen Herstellungskosten verringert sind.

Insbesondere wird der Gleichspannungswandler lediglich in bestimmten Zuständen des Fahrzeugs betrieben, sodass die Steuereinheit ebenfalls lediglich dann betrieben wird. Vorzugsweise erfolgt hierbei ein Betrieb, wenn eine Zündung des Fahrzeugs betätigt ist, oder dieses zumindest in einen bestimmten Betriebszustand versetzt ist. Hierfür ist der Gleichspannungswandler zweckmäßigerweise entsprechend verschaltet und zum Beispiel mit einem entsprechenden Eingang beaufschlagt, insbesondere der sogenannten Klemme 15. Auf diese Weise ist ein Energiebedarf des Hauptschalters verringert und Kriechströme vermieden.

Besonders bevorzugt weist der Hauptschalter eine Datenschnittstelle auf, die signaltechnisch mit der Steuereinheit verbunden ist. Mit anderen Worten sind die Datenschnittstelle und die Steuereinheit entsprechen miteinander verschaltet. Die Datenschnittstelle ist beispielsweise analog oder bevorzugt digital ausgestaltet. Vorzugsweise umfasst die Datenschnittstelle einen Kondensator, mittels dessen eine Stabilisierung einer anliegenden Spannung/Signalen erfolgt. Insbesondere entspricht die Datenschnittstelle einem bestimmten Standard, vorzugsweise eines Bussystems. Geeigneterweise wird als Bussystem ein CAN-, LIN-, Ethernet-, oder SENT-Bussystem verwendet. Bevorzugt ist im Montagezustand mittels der Steuereinheit in Verbindung mit der Datenschnittstelle ein Client-Steuergerät (ehemals "Slave"-Steuergerät) des Bussystems realisiert. In einer Alternative hierzu wirkt die Steuereinheit als Master-Steuergerät. Alternativ oder in Kombination hierzu umfasst die Datenschnittstelle einen USB-Anschluss oder einen sonstigen seriellen Port. Geeigneterweise umfasst die Datenschnittstelle mehr derartige Anschlüsse, sodass eine Flexibilität erhöht ist.

Insbesondere werden bei Betrieb über die Datenschnittstelle Aufforderungen und/oder Befehle empfangen, insbesondere zur Betätigung des ersten und/oder etwaigen zweiten Schalters. Vorzugsweise ist die Steuereinheit derart betrieben, dass die Aufforderungen/Befehle empfangen und oder bearbeitet werden. Zweckmäßigerweise ist die Steuereinheit derart betrieben, dass über die Datenschnittstelle Daten ausgegeben werden, wie zum Beispiel die gemessenen elektrischen Ströme und/oder etwaige elektrische Spannungen. Alternativ oder in Kombination hierzu werden über die Datenschnittstelle Fehlerzuständen oder sonstige Zustände des Hauptschalters übertragen. Aufgrund der Datenschnittstelle ist somit beispielsweise ein Betätigen des ersten Schalters mittels eines Bordcomputers des Fahrzeugs möglich und/oder ein Auswerten der mittels des Hauptschalters erfassten Daten, weswegen ein Funktionsumfang weiter erhöht ist. Geeigneterweise ist die Datenschnittstelle mechanisch mit dem etwaigen weiteren Stromanschluss in einem gemeinsamen Stecker integriert, weswegen eine Montage des Hauptschalters weiter vereinfacht ist.

Zweckmäßigerweise weist der Hauptschalter ein Gehäuse auf, innerhalb dessen der erste Schalter angeordnet ist. Somit ist der erste Schalter mittels des Gehäuses geschützt. Sofern der zweite Schalter, die Vorladeschaltung und/oder die Entladungsschaltung vorhanden sind, sind diese zweckmäßigerweise ebenfalls innerhalb des Gehäuses angeordnet. Zudem sind in dem Gehäuse die Steuereinheit sowie die Stromsensoren angeordnet, sodass eine Robustheit weiter erhöht ist.

Die beiden Hauptstrompfade erstrecken sich hierbei zwischen jeweils zwei Anschlüsse. Beispielsweise sind die Anschlüsse ebenfalls innerhalb des Gehäuses angeordnet, sodass diese mittels des Gehäuses mechanisch geschützt sind. Besonders bevorzugt jedoch sind die Anschlüsse außerhalb des Gehäuses angeordnet, und das Gehäuse weist insbesondere mehrere Durchbrüche auf, wobei durch jeden der Durchbrüche jeweils ein Teil zumindest eines der Hauptstrompfade geführt ist. Vorzugsweise weist das Gehäuse dabei vier Durchbrüche auf. Insbesondere umfasst jeder Hauptstrompfad zumindest eine Stromschiene, die durch den jeweiligen Durchbruch geführt ist. Besonders bevorzugt ist jeder Durchbruch fluiddicht ausgestaltet, sodass ein Eindringen von Fremdpartikeln in das Gehäuse unterbunden ist.

Die Anschlüsse sind beispielsweise derart ausgestaltet, dass an diese jeweils ein Kabelschuh oder dergleichen angeschlossen werden kann. Hierfür ist jeder der Anschlüsse zum Beispiel mittels eines Flachleiters gebildet, in den ein (Schraub- )Bolzen eingepresst oder daran verschweißt ist. Alternativ hierzu ist jeder der Anschlüsse nach Art eines Steckers gebildet, sodass ein Aufstecken eines entsprechenden Gegensteckers des Bordnetzes ebenfalls zur elektrischen Kontaktierung möglich ist. Beispielsweise sind hierbei jeweils zwei der Gegenstecker jeweils mittels eines gemeinsamen Steckergehäuses gehalten, was eine Montage erleichtert. Besonders bevorzugt weist hierbei der Hauptschalter ein Interlock-System auf. Hierbei sind den beiden Anschlüssen jeweils ein oder mehrere Hilfsanschlüsse zugeordnet, die im Montagezustand elektrisch mit Hilfsgegensteckern kontaktiert sind, die ebenfalls an dem Steckergehäuse gehalten sind. Mittels der Hilfsanschlüsse/ Hilfsgegenstecker wird dabei lediglich ein vergleichsweise geringer Strom geführt und/oder eine vergleichsweise geringe Spannung liegt an diesen an. Bei Ablösen des Steckergehäuses werden die Hilfsgegenstecker als erstes von den Hilfsanschlüssen getrennt, noch bevor die Anschlüsse von den Gegensteckern getrennt werden. Sobald das Ablösen der Hilfsanschlüsse erfasst wird, wird dabei mittels der Steuereinheit der erste Schalter betätigt, sodass an den Anschlüssen keine elektrische Spannung mehr anliegt, sodass etwaige anwesende Personen geschützt werden. Alternativ oder in Kombination hierzu wird eine Warnung ausgegeben, sodass Personen in der Umgebung des Hauptschalters auf ein Ablösen des Gegensteckers aufmerksam gemacht werden.

Beispielsweise ist das Gehäuse aus einem Aluminium gefertigt. Auf diese Weise ist ein Abführen von innerhalb des Gehäuses entstehender Wärme vereinfacht. Bevorzugt ist dabei das Gehäuse zumindest abschnittsweise nach Art eines Kühlkörpers ausgestaltet und weist somit außenseitig zumindest teilweise Kühlrippen auf, die insbesondere einstückig mit weiteren Bestandteilen sind. Somit ist ein Abführen von Wärme weiter vereinfacht, wobei das Gehäuse fluiddicht ist. Alternativ hierzu ist das Gehäuse zumindest teilweise aus einem Kunststoff gefertigt, was ein Gewicht und Herstellungskosten reduziert. Geeigneterweise weist dabei das Gehäuse einen Ausschnitt aus, in den ein Kühlkörper aus einem Aluminium oder einem sonstigen Metall eingesetzt ist. Somit ist dennoch ein Abführen von überschüssiger Wärme ermöglicht.

Insbesondere weist das Gehäuse einen schachtelartigen Grundkörper auf, der mit einem Deckel verschlossen ist. Auf diese Weise ist ein separates Fertigen des Gehäuses und der anderen Komponenten des Hauptschalters möglich. Auch ist auf diese Weise beispielsweise eine Wartung und/oder Ersetzen von Bauteilen möglich. Zweckmäßigerweise ist zwischen dem Grundkörper und dem Deckel eine Dichtung vorhanden, die beispielsweise eine Lamellen- oder Schaumdichtung ist. Alternativ hierzu ist die Dichtung als Spritzdichtung ausgestaltet, oder der Deckel ist mit dem Grundkörper umlaufend verklebt oder mit einem Gewebe versehen. Auf diese Weise ist trotz der mehrteiligen Ausgestaltung des Gehäuses ein Eindringen von Fremdpartikeln in das Gehäuse vermieden. Das Gehäuse oder zumindest der Grundkörper ist beispielsweise aus einem Kunststoff oder Metall, wie einem Aluminium, also reinem Aluminium oder einer Aluminiumlegierung, gefertigt.

Zweckmäßigerweise umfasst das Gehäuse mehrere Laschen, die insbesondere an dem etwaigen Grundkörper befestigt, geeigneterweise angeformt, sind. Mittels der Laschen ist eine Montage des Gehäuses an weiteren Bestandteilen des Fahrzeugs vereinfacht. Insbesondere weisen jede Laschen eine Öffnung auf, durch die jeweils eine Montageschrauben zur Befestigung an weiteren Bestandteilen des Fahrzeugs führbar sind, und die im Montagezustand dort auch angeordnet sind. Geeigneterweise ist bei jeder der Laschen ein Kompressionskraftbegrenzer vorgesehen, beispielsweise eine Metallhülse, die in die jeweilige Öffnung eingesetzt ist. Mittels dieser wird insbesondere sichergestellt, dass eine beim Verschrauben aufgebrachte Vorspannung erhalten wird. Daher wird die Festigkeit der Montageschraube sichergestellt und zu erhalten. Ein Schutz vor Beschädigung wird insbesondere mittels einer geeigneten Abstimmung zwischen Metallhülse und dem Gehäuse erreicht.

Besonders bevorzugt weist das der schachtelartige Grundkörper eine Aussparung auf. Insbesondere ist die Aussparung hierbei randseitig offen. In die Aussparung ist ein Kunststoffkörper eingesetzt, mittels dessen die Aussparung insbesondere vollständig ausgefüllt ist. Vorzugsweise ist der Kunststoffkörper mit dem Grundkörper verklebt, was eine Dichtigkeit und Robustheit erhöht. Der Kunststoffkörper ist beispielsweise aus einem elektrotechnischen Kunststoff wie PBT oder Polyamid erstellt. Beispielsweise weist der Kunststoffkörper randseitig eine Dichtung auf, oder an diesem ist eine Dichtung befestigt, die zum Beispiel aus einem Gummi gefertigt ist. Der Kunststoffkörper und/oder etwaige Gummidichtung, sind zum Beispiel mittels Spritzgießens erstellt. Mittels der Dichtung ist dabei der Übergang zwischen dem Kunststoffkörper und dem Rand der Aussparung ausgefüllt, sodass im Montagezustand der Kunststoffkörper fluiddicht mit dem Grundkörper verbunden ist. Somit ist trotz der Aussparung ein Eindringen von Partikeln in das Gehäuse vermieden ist. Insbesondere bildet der Kunststoffkörper zumindest ein Teil der Wand des Gehäuses.

An dem Kunststoffkörper sind die Anschlüsse des ersten Hauptstrompfads befestigt. Insbesondere reichen dabei die etwaigen damit verbundenen Stromschienen durch den Kunststoffkörper hindurch, sodass mittels des Kunststoffkörpers die Anschlüsse elektrisch in das Innere des Gehäuses geführt sind. Zweckmäßigerweise umfasst der Kunststoffkörper ein Isolierschild, das zwischen den Anschlüssen angeordnet ist. Mittels des Isolierschilds ist dabei ein unbeabsichtigter Kurzschluss beim Anschließen von Leitungen an die Anschlüsse vermieden. Zudem ist an dem Kunststoffkörper der erste Schalter befestigt. Somit ist ein Modul bereitgestellt, das den Kunststoffkörper, die Anschlüsse, den ersten Schalters sowie die etwaigen Stromschienen umfasst und vorzugsweise damit gebildet ist. Somit ist eine Montage des ersten Schalters sowie der Anschlüsse an dem Gehäuse ist in einem Arbeitsschritt ermöglicht. Bei einem Defekt des ersten Schalters ist hierbei ein Austausch des Moduls möglich, wobei, mit Ausnahme der Verbindung des ersten Schalters mit der Steuereinheit im Wesentlichen keine zusätzlichen Tätigkeiten durchgeführt werden, sodass der Austausch auch unabhängig von einer Werkstatt durchgeführt werden kann. Auch ist es möglich, den Hauptschalter auf die jeweils gewünschte Anwendung anzupassen, indem das jeweilige Modul ausgetauscht wird. Zusammenfassend ist eine Modularisierung ermöglicht und Herstellungskosten reduziert.

Sofern der zweite Schalter vorhanden ist, weist das Gehäuse vorzugsweise eine zweite Aussparung auf, in die ein zweiter Kunststoffkörper eingesetzt ist. An diesem ist dabei der zweite Schalter sowie die zugeordneten Anschlüsse befestigt. Vorzugsweise ist der zweite Schalter ein Bestandteil eines entsprechenden Moduls, das baugleich zu dem den ersten Schalter aufweisenden Modul ist. Auf diese Weise können Gleichteile verwendet werden, weswegen eine Lagerhaltung vereinfacht und Herstellungskosten reduziert sind.

Nachfolgend werden Ausführungsbeispiele der Erfindung anhand einer Zeichnung näher erläutert. Darin zeigen:
- Fig. 1: schematisch ein Fahrzeug mit einem Hauptschalter,
- Fig. 2: ein Blockschaltbild des Hauptschalters,
- Fig. 3: perspektivisch der Hauptschalter in einer Explosionsdarstellung, der zwei Module aufweist,
- Fig. 4: perspektivisch eines der Module, das einen ersten Schalter umfasst,
- Fig. 5: den Hauptschalter perspektivisch in einer Rückansicht,
- Fig. 6, 7: perspektivisch in einer Front- bzw. Rückansicht eine alternative Ausführungsform des Hauptschalters.

Einander entsprechende Teile sind in allen Figuren mit den gleichen Bezugszeichen versehen.

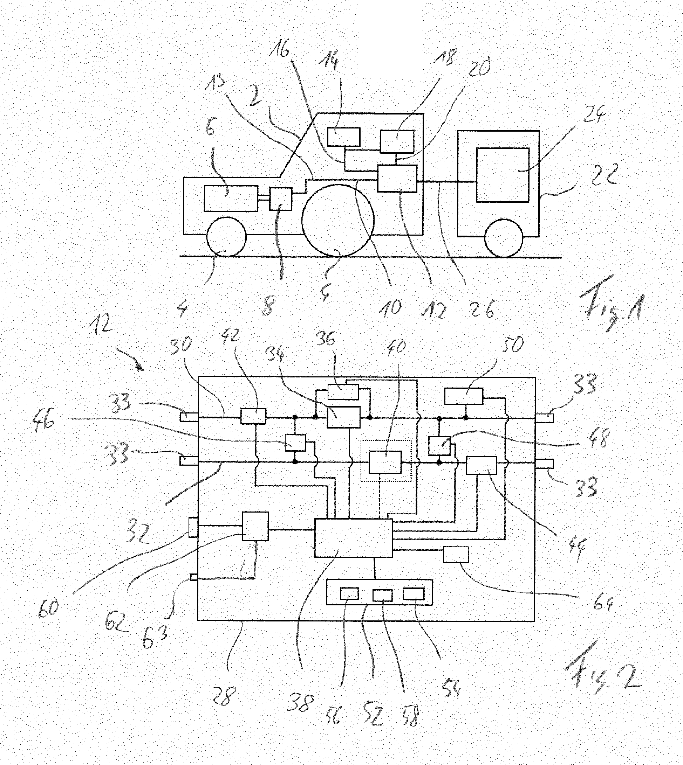

In Figur 1 ist schematisch vereinfacht ein Fahrzeug 2 in Form einer Landmaschine, nämlich eines Traktors, also einer Zugmaschine, dargestellt. Das Fahrzeug 2 umfasst mehrere Räder 4, von denen zumindest einige mittels einer Verbrennungskraftmaschine 6 über ein nicht näher dargestelltes Getriebe angetrieben sind. Mittels der Verbrennungskraftmaschine 6 ist zudem ein Generator 8 angetrieben, mittels dessen ein Bordnetz 10 mit elektrischer Energie versorgt wird. Hierfür wird mittels des Generators 8 in das Bordnetz 10 eine elektrische Gleichspannung mit 48 V gespeist. Das Bordnetz 10 weist einen Hauptschalter 12 auf, der dem Generator 8 direkt nachgeschaltet ist. Mit anderen Worten sind zwischen dem Generator 8 und dem Hauptschalter 12 mit Ausnahme einer Anschlussleitung 13 keine weiteren Bestandteile des Bordnetzes 10 angeordnet. Auch sind dort keine sonstigen Bauteile mit dem Bordnetz 10 kontaktiert.

Das Fahrzeug 2 umfasst ferner eine Batterie 14, mittels derer ein sekundäres Bordnetz 16 gespeist ist. Mittels der Batterie 14 ist eine elektrische Gleichspannung von 12 V bereitgestellt, die somit mittels des sekundären Bordnetzes 16 geführt ist. Die Batterie 14 wird bei Betrieb mittels des Generators 8 über einen nicht näher dargestellten Gleichspannungswandler bei Bedarf geladen. Mit dem sekundären Bordnetzes 16 sind der Hauptschalter 12 und ein Bordcomputer 18 bestromt. Der Bordcomputer 18 und der Hauptschalter 12 sind mittels eines Bussystems 20 signaltechnisch verbunden, sodass es möglich ist zwischen dem Bordcomputer 18 und dem Hauptschalter 12 Daten/Signale auszutauschen.

An das Fahrzeug 2 ist ein Anhänger 22 angehängt und lösbar mit diesem verbunden. Der Anhänger 22 trägt ein Aggregat 24, das mittels des Bordnetzes 10 bestromt ist. Hierfür weist das Aggregat 24 einen nicht näher dargestellten Stecker auf, der mit einer dem Hauptschalter 12 nachgeschalteten Leitung 26 des Bordnetzes 10 elektrisch verbunden ist. Mittels des Aggregats 24 wird bei Betrieb eine bestimmte Funktion durchgeführt. So ist beispielsweise der Anhänger 22 eine Setzmaschine, und mittels des Aggregats 24 werden Setzlinge in geeignet positionierte Führungen gesetzt.

In Figur 2 ist ein schematisch vereinfachter Schaltplan des Hauptschalters 12 dargestellt. Der Hauptschalter 12 weist ein Gehäuse 28 auf, durch das ein erster Hauptstrompfad 30 und ein zweiter Hauptstrompfad 32 reichen. Jedem Hauptstrompfad 30, 32 sind zwei Anschlüsse 33 zugeordnet, die außerhalb des Gehäuses 28 angeordnet sind, und zwischen denen sich die Hauptstrompfade 30, 32 erstrecken. Hierbei ist jeder Hauptstrompfad 30, 32 oder jeder Anschlüsse 33 durch entsprechende Durchbrüche des Gehäuses 28 geführt.

Einer der Anschlüsse 33 des ersten Hauptstrompfads 30 sowie einer der Anschlüsse 33 des zweiten Hauptstrompfads 32 sind direkt mit der zu dem Generator 8 führenden Anschlussleitung 13 verbunden. Die verbleibenden Anschlüsse 33 sind hingegen mit der Leitung 26 elektrisch kontaktiert, die somit daran angeschlossen ist.

In den ersten Hauptstrompfad 30 ist ein erster Schalter 34 eingebracht, der als Relais ausgestaltet ist. Hierbei ist es möglich, mittels des ersten Schalters 34 einen elektrischen Strom von 250 A zu tragen sowie zu schalten, wobei eine an dem ersten Schalter 34 anliegende elektrische Spannung 48 V betragen kann. Mittels des ersten Schalters 34 ist es möglich, einen Stromfluss über den ersten Hauptstrompfad 30 zu unterbrechen, nämlich indem der erste Schalter 34 geöffnet wird. Bei einem Schließen des ersten Schalters 34 hingegen erfolgt ein Stromfluss über den ersten Hauptstrompfad 30. Der erste Schalter 34 ist mit einer Vorladeschaltung 36 überbrückt, die einen nicht näher dargestellten weiteren Schalter aufweist, der bevorzugt ein Relais oder alternativ ein Halbleiterschalter ist, und der in Reihe mit einem Widerstand geschaltet ist.

Der erste Schalter 34 und die Vorladeschaltung 36, also der weitere Schalter, sind mittels einer Steuereinheit 38 betrieben und folglich betätigt. Hierbei wird mittels der Steuereinheit 38 bei Betrieb die für das Schalten des ersten Schalters 34 sowie des weiteren Schalters 36 erforderlichen elektrische Energie bereitgestellt und hierfür eine entsprechende Schaltspannung an die jeweiligen Schalter angelegt.

In den zweiten Hauptstrompfad 32 ist bei zumindest einigen Ausführungsformen der Erfindung ein zweiter Schalter 40 eingebracht, der baugleich zu dem ersten Schalter 34 ausgestaltet ist. Auch der zweite Schalter 40 ist, sofern dieser vorhanden ist, mittels der Steuereinheit 38 betätigt. Somit ist es mittels des zweiten Schalters 40 möglich, den zweiten Hauptstrompfad 32 ebenfalls aufzutrennen, sodass ein Stromfluss über diesen unterbrochen ist. Der Hauptstrompfad 32 ist in nicht näher dargestellter Weise elektrisch gegen Masse geführt.

Mit der Steuereinheit 38 sind ferner ein erster Stromsensor 42 und ein zweiter Stromsensor 44 betrieben, die zueinander baugleich und jeweils als Shunt ausgestaltet sind. Hierbei ist der erste Stromsensor 42 dem ersten Hauptstrompfad 30 zugeordnet, und der zweite Stromsensor 44 ist dem zweiten Hauptstrompfad 32 zugeordnet. Bei Betrieb werden mittels der beiden Stromsensor 42, 44 Messdaten erstellt, die mittels der Steuereinheit 38 ausgelesen werden. Dabei wird mittels der beiden Stromsensoren 42, 44 sowie der Steuereinheit 38 der mit jedem der Hauptstrompfade 30, 32 geführte elektrische Strom erfasst. Falls dabei eine Abweichung zwischen den mittels der beiden Stromsensoren 42, 44 erfassten elektrischen Ströme größer als ein Grenzwert von 0,5 A ist, wird der erste Schalter 34 geöffnet, sodass ein Stromfluss über den ersten Hauptstrompfad 30 unterbunden wird. Eine derartige Differenz tritt beispielsweise auf, falls ein Isolierfehler der Leitung 26 oder eine Fehlfunktion des Aggregats 24 vorliegt, die zu Kriechströmen führt. In diesem Fall wird somit mittels Betätigens des ersten Schalters 34 eine weitere Beschädigung des Aggregats 24 oder der Umgebung des Fahrzeugs 2 sowie des Anhängers 22 vermieden. Zusätzlich zu dem ersten Schalter 34 wird auch der zweite Schalter 40 betätigt, sodass an der Leitung 26 überhaupt keine elektrische Spannung mehr anliegt. In einer nicht näher dargestellten Variante sind die beiden Stromsensor 42,44 mittels einer gemeinsamen Baueinheit realisiert, nämlich als Differenzstromsensor.

Wenn das Aggregat 24 betrieben werden soll, wird zunächst der zweite Schalter 40 geschlossen. Bevor der erste Schalter 34 in den elektrisch leitenden Zustand überführt wird, wird zunächst die Vorladeschaltung 36 betätigt, nämlich der weitere Schalter. Somit fließt zunächst über die Vorladeschaltung 36 ein elektrischer Strom, der aufgrund des Widerstands der Vorladeschaltung 36 begrenzt ist. Die an den der Leitung 26 zugewandten Anschlüssen 33 anliegende elektrische Spannung ist zudem begrenzt, sodass Stromspitzen in dem Bordnetz 10 vermieden werden. Erst wenn die über den ersten Schalter 34 anfallende elektrische Spannung einen bestimmten Grenzwert unterschreitet, wird der erste Schalter 34 geschlossen und im Anschluss hieran der weitere Schalter geöffnet, sodass die Vorladeschaltung 36 nicht mehr stromführend ist. Somit treten bei der Vorladeschaltung 36 keine elektrischen Verluste auf, und der elektrische Widerstand des ersten Hauptstrompfads 30 ist vergleichsweise gering.

Zum Bestimmen der über den ersten Schalter 34 anliegenden elektrischen Spannung weist der Hauptschalter 12 einen ersten Spannungssensor 46 und einen zweiten Spannungssensor 48 auf, mittels derer die zwischen den beiden Hauptstrompfaden 30, 32 anliegende elektrische Spannung gemessen werden kann. Zwischen den beiden Spannungssensoren 46, 48 befinden sich hierbei der erste Schalter 34 sowie der zweite Schalter 40. Die beiden Spannungssensoren 46, 48 sind mit der Steuereinheit 38 signaltechnisch verbunden.

Zusätzlich zum Bestimmen der über den ersten Schalter 34 anliegenden elektrischen Spannung wird anhand der mittels der Spannungssensoren 46, 48 sowie der Steuereinheit 38 erfassten jeweiligen elektrische Spannung auch der erste Schalter 34 sowie gegebenenfalls der zweite Schalter 40 betätigt. Falls beispielsweise die mittels des zweiten Spannungssensors 48 erfasste elektrische Spannung absinkt, was bei einem Kurzschluss des Aggregats 24 der Fall ist, werden ebenfalls der erste Schalter 34 und der zweite Schalter 40 betätigt, was eine weitere Fehlfunktion unterbindet.

Der Hauptschalter 12 umfasst ferner eine Entladungsschaltung 50, die auf der der Leitung 26 zugewandten Seite des ersten Schalters 34 gegen den ersten Hauptstrompfad 30 geführt ist. Die Entladungsschaltung 50 weist einen Widerstand sowie einen zusätzlichen Schalter auf, die elektrisch in Reihe geschaltet sind. Das verbleibende Ende der Entladeschaltung 50 ist elektrisch gegen Masse geführt. In einer nicht näher dargestellten Variante ist die Entladungsschaltung 50 zwischen die beiden Hauptstrompfade 30, 32 geschaltet, wobei sich die Entladungsschaltung 50 auf der dem Generator 8 abgewandten Seite des ersten Schalters 34 sowie des zweiten Schalters 40 befindet. Sofern aufgrund eines Fehlverhaltens, also beispielsweise aufgrund einer zu großen Abweichung der erfassten elektrischen Ströme oder einer bestimmten anliegende elektrische Spannung, oder wenn eine bestimmte Bedingung vorliegt, sodass der erste Schalter 34 sowie der zweite Schalter 40 geöffnet werden, wird die Entladungsschaltung 50 betätigt. In diesem Falls wird der zusätzliche Schalter geschlossen, sodass der erste Hauptstrompfad 30 elektrisch gegen Masse geführt wird. Somit liegt nach dem Öffnen des ersten Schalters 34 an dem Aggregats 24 als elektrisches Potential Masse an, weswegen ein sicheres Abtrennen des Anhängers 22 möglich und eine Fehlerbehebung erleichtert ist.

Der Hauptschalter 12 weist ferner einen Datenschnittstelle 52 auf, die einen USB-Anschluss 54, einen analogen Anschluss 56 sowie einen digitalen Anschluss 58 aufweist. An den digitalen Anschluss 58 ist das Bussystem 20 angeschlossen. Bei Betrieb werden mittels der Steuereinheit 38 über die Datenschnittstelle 52 Zustandsdaten bereitgestellt, sodass beispielsweise von dem Bordcomputer 18 ein aktueller Zustand der beiden Schalter 34, 40 abrufbar ist. Auch werden über die Datenschnittstelle 52 die mittels der Sensoren 42, 44, 46, 48 erfassten Daten bereitgestellt, sodass diese zum Beispiel auf einem mit dem USB-Anschluss 54 verbundenen Laufwerk gespeichert werden können. Zudem ist es möglich, über die Datenschnittstelle 52 Befehle zu der Steuereinheit 38 zuleiten, in Abhängigkeit derer die Schalter 34, 40 geöffnet oder geschlossen werden. Somit ist eine Beeinflussung der Bestromung des Aggregats 24 mittels des Bordcomputers 18 ermöglicht.

Die Steuereinheit 38 ist über einen weiteren Stromanschluss 60 bestromt, der mit dem sekundären Bordnetz 16 elektrisch kontaktiert ist. Hierbei ist zwischen den weiteren Stromanschluss 60 und die Steuereinheit 38 ein Gleichspannungswandler 62 geschaltet. Mittels des Gleichspannungswandlers 62 wird die an dem weiteren Stromanschluss 60 bereitgestellte elektrische Gleichspannung von 12 V auf eine elektrische Gleichspannung von 5 V herabgesetzt. Aufgrund der Bestromung über das sekundäre Bordnetz 16 ist hierbei eine erforderliche Spannungsfestigkeit des Gleichspannungswandler 62 reduziert.

Der Gleichspannungswandler 62 ist hierbei über eine weiteren Anschluss 63 mit einer Zündung des Fahrzeugs 2 verbunden. Mit anderen Worten entspricht der weitere Anschluss 63 der Klemme 15. Dabei wird der Gleichspannungswandler 62 lediglich dann betrieben, wenn an dem weiteren Anschluss 63 ein Pegel anliegt. Somit erfolgt ein Bereitstellen der elektrischen Spannung mittels des Gleichspannungswandler 62 lediglich bei eingeschalteter Zündung, und lediglich dann wird die Steuereinheit 38 betrieben. Somit ist ein Energiebedarf verringert.

Der erste Schalter 34 und auch der zweite Schalter 40 sind derart ausgestaltet, dass diese lediglich dann, wenn mittels der Steuereinheit 38 ein entsprechendes Signal angelegt wird, sich in dem elektrisch leitenden Zustand befinden. Mit anderen Worten sind die Schalter 34, 40 monostabil ausgestaltet. Sofern somit mit der Steuereinheit 38 kein derartiges Signal erstellt/elektrische Spannung angelegt wird, befinden sich der erste Schalter 34 und der zweite Schalter 40 in dem geöffneten Zustand. Somit ist bei einem Ausfall der Steuereinheit 38, oder auch wenn die Zündung ausgeschaltet ist, ein Betrieb der an der Leitung 26 angeschlossen Bauteile, wie des Aggregats 24 nicht möglich, was eine Sicherheit erhöht.

Der Hauptschalter 12 umfasst ferner ein Interlock-System 64, das mit der Steuereinheit 38 zumindest teilweise betrieben ist. Das Interlock-System 64 weist mehrere nicht näher dargestellte Hilfsanschlüsse auf, die mit entsprechenden Hilfsgegensteckern der Leitung 26 elektrisch verbunden sind. Die mit den Hilfsanschlüssen/Hilfsgegensteckern geführten elektrischen Ströme betragen hierbei einige Milliampere, wobei die anliegende elektrische Spannung unter 50 V ist. Bei einem Ablösen der Leitung 26 von dem Hauptschalter 12 werden aufgrund der geometrischen Ausgestaltung zunächst die Hilfsanschlüsse von den Hilfsgegenstecker getrennt, wobei die Anschlüsse 33 noch mit den zugeordneten Gegenstecker der Leitung 26 elektrisch verbunden sind. Wenn das Ablösen der Hilfsanschlüsse von den Hilfsgegenstecker festgestellt wird, werden der erste Schalter 34 sowie der zweite Schalter 40 geöffnet, sodass an den Anschlüssen 33, die der Leitung 26 zugeordnet sind keine elektrische Spannung mehr anliegt. Wenn somit nachfolgend die Leitung 26 vollständig abgelöst wird, ist bei einer Berührung des Hauptschalters 12 oder von diesem nachgeschalteten Bestandteilen des Bordnetzes 10 durch eine Person keine Gefährdung vorhanden.

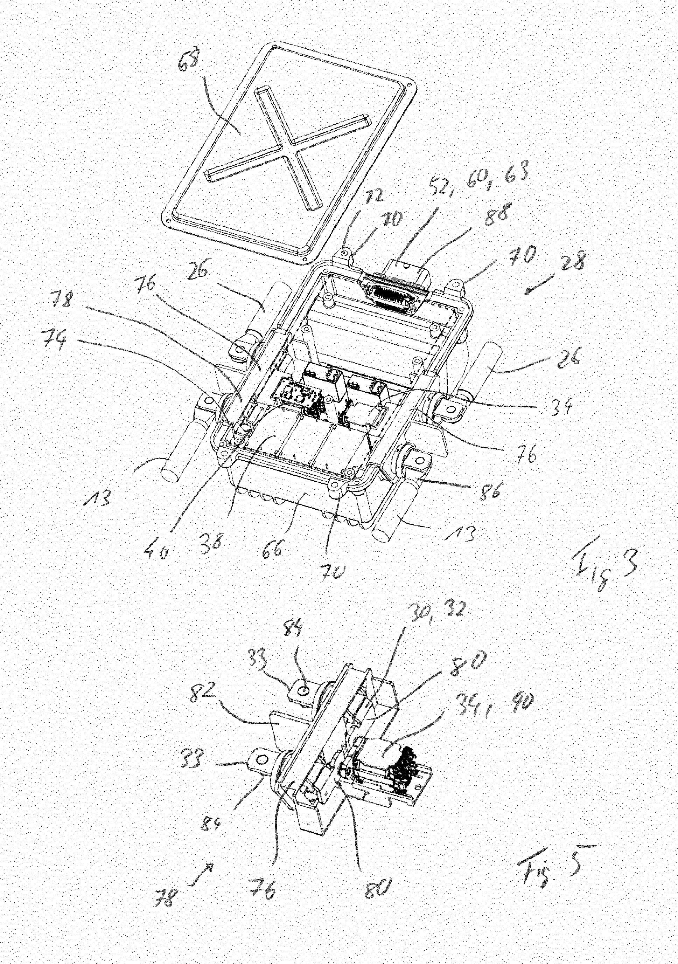

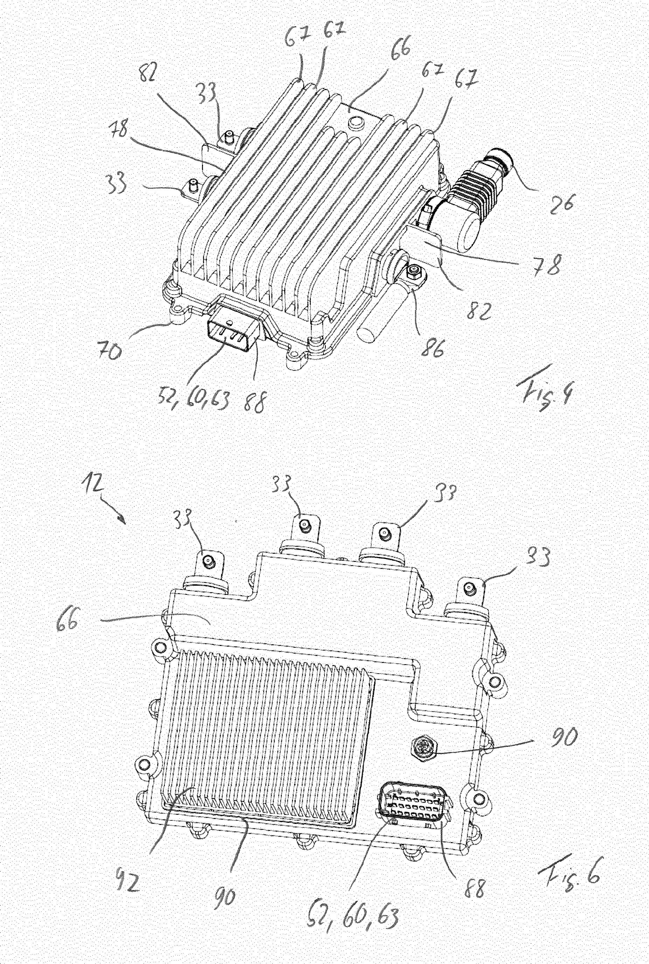

In Figur 3 ist in einer perspektivischen Explosionsdarstellung eine erste Ausführungsform des Hauptschalters 12 dargestellt. Das Gehäuse 28 weist einen schachtelartigen Grundkörper 66 auf der aus einem Aluminium erstellt ist, und der in Figur 4 perspektivisch von der Rückseite dargestellt ist. An dem Boden des schachtel- oder topfartigen Grundkörpers 66 sind an der Außenseite mehrere Kühlrippen 67 angeformt, sodass der Grundkörper 66 teilweise nach Art eines Kühlkörpers ausgestaltet ist.

Der Grundkörper 66 ist im Montagezustand mittels eines ebenfalls aus Aluminium erstellten flachen Deckels 68 fluiddicht verschlossen, wobei zwischen diesen eine nicht näher dargestellte Dichtung vorhanden ist. In einer nicht näher dargestellten Variante wird die Dichtwirkung mittels eines Klebers realisiert. Innerhalb des Grundkörper 66 ist die Steuereinheit 38 angeordnet, die an einer Leiterplatte befestigt ist oder diese umfasst. An der Leiterplatte sind zudem die Vorladeschaltung 36 sowie die Entladungsschaltung 50 und die Sensoren 42, 44, 46, 48 sowie weitere innerhalb des Gehäuses 28 angeordnete Komponenten des Hauptschalter 12 befestigt.

An dem Grundkörper 66 sind außenseitig nach außen weisende Laschen 70 angeformt, die der Befestigung des Hauptschalters 12 an weiteren Bestandteilen des Fahrzeugs 2 dienen. Hierfür weisen die Laschen 70 jeweils eine Öffnung 72 auf, innerhalb derer im Montagezustand entsprechende Montageschrauben angeordnet sind. Zudem ist die Öffnung 70 mittels eines nicht näher dargestellten Kompressionskraftbegrenzers ausgekleidet, der mittels einer Metallhülse bereitgestellt ist.

Der Grundkörper 66 weist an gegenüberliegenden (Rand-)Seiten jeweils randseitig offene Aussparungen 74 auf, die mittels eines jeweiligen Kunststoffkörpers 76 vollständig ausgefüllt sind. Jeder Kunststoffkörper 76 ist ein Bestandteil eines von zwei zueinander baugleichen Modulen 78, von denen eines in Figur 5 perspektivisch vergrößert gezeigt ist. Hierbei ist mittels eines der Module 78 der erste Schalter 34 und mit dem verbleibenden der zweite Schalter 40 bereitgestellt. An dem Kunststoffkörper 76 des jeweiligen Moduls 78 ist der erste bzw. zweite Schalter 34, 40 befestigt, wobei sich die Schalter 34, 40 an der der Gehäuseinnenseite zugewandten Seite des Kunststoffkörpers 76 befinden. Auf der gegenüberliegenden Seite des Kunststoffkörpers 76 sind an diesem die dem jeweiligen Schalter 34, 40 zugeordneten Anschlüsse 33 befestigt, die in eine jeweilige Stromschiene 80 des jeweiligen Hauptstrompfads 30, 32 übergehen. Zwischen den beiden Anschlüssen 33 ist ein plättchenförmiger Isolierkörper 82 des Kunststoffkörpers 76 angeordnet, weswegen ein unbeabsichtigter Kurzschluss zwischen den beiden Anschlüssen 33 bei einem Anschluss an weitere Bauteile vermieden ist.

Die Stromschienen 80 sind mit dem Kunststoff des Kunststoffkörpers 76 umspritzt, sodass das Modul 78 fluiddicht ausgestaltet ist. In einer nicht näher dargestellten Variante sind die Stromschienen 80 zusätzlich mit einer Dichtmasse vergossen. Mit den Stromschienen, die durch den Kunststoffkörper 76 ragen, ist der jeweilige Schalter 34, 40 elektrisch kontaktiert. Jeder Anschluss 33 ist mittels eines Flachleiters gebildet, der einstückig mit der jeweiligen Stromschiene 80 ist, und in den ein Bolzen 84 eingepresst ist, an den ein Kabelschuh 86 der Anschlussleitung 13 oder der Leitung 26 angeschlossen werden kann.

An den Grundkörper 66 ist ein Stecker 88 befestigt, der teilweise aus einem Kunststoff erstellt ist. In den Stecker 88 ist die Datenschnittstelle 52, der weiterer Stromanschluss 60 sowie der weitere Anschluss 63 integriert. Somit ist eine Montage des Hauptschalters 12 vereinfacht.

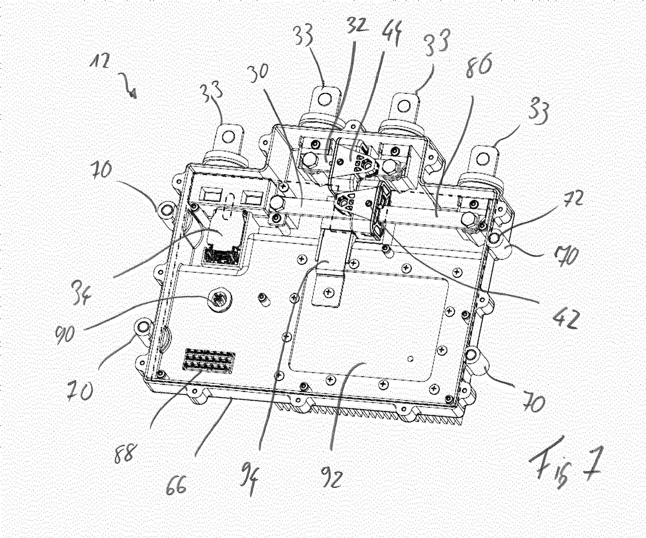

In Figur 6 ist in einer Frontansicht und in Figur 7 in einer Rückansicht eine alternative Ausführungsform des Hauptschalters 12 dargestellt. Auch hier weist der Hauptschalter 12 das Gehäuse 28 mit dem schachtelartigen oder schalenartigen Grundkörper 66 auf, der mit dem Deckel 68 verschlossen ist, der in Figur 7 jedoch nicht gezeigt ist. Der schachtelartige Grundkörper 66 ist in dieser Ausführung aus einem Kunststoff erstellt, ebenso wie der nicht näher dargestellte Deckel.

Der schachtelartigen Grundkörper 66 weist an dessen Boden einen rechteckförmigen Ausschnitt 90 auf, in den ein Kühlkörper 92 aus einem Aluminium eingesetzt ist. Bei der Herstellung wird der Kühlkörper 92 umfangsseitig mittels des Kunststoffs des Grundkörpers 66 umspritzt, sodass eine fluiddichte Verbindung zwischen diesen erstellt ist. In einer weiteren Alternative ist der Kühlkörper 92 unter Verwendung einer Dichtung und /oder Verklebung dicht mit dem Grundkörper 66 verbunden. Der Kühlkörper 92 ist über eine elektrisch isolierende Thermobrücke 94 und ggf. eine Wärmeleitpaste mit in dem Grundkörper 66 angeordneten Bauteilen thermisch verbunden, sodass bei Betrieb eine Entwärmung dieser erfolgt. Auch bei dieser Variante sind an den Grundkörper 66 die Laschen 70 mit den Öffnungen 72 angeformt, innerhalb derer jeweils einer der Kompressionskraftbegrenzer angeordnet ist.

Bei dieser Ausführungsform sind die Module 78 nicht vorhanden, sondern die in gleicher Art und Weise ausgestalteten Anschlüsse 33, die zueinander parallel angeordnet sind, reichen direkt in den Grundkörper 66 hinein und sind bei Herstellung ebenfalls mit dem Kunststoff des Grundkörpers 66 umspritzt worden, sodass eine fluiddichte Anbindung erfolgt. In einer nicht näher dargestellten Variante ist zusätzlich die Dichtmasse vorhanden, mittels derer die Anschlüsse 33 vergossen sind. Die dem zweiten Hauptstrompfad 32 zugeordneten Anschlüsse 33 sind mittels einer der Stromschienen 80 direkt elektrisch miteinander kontaktiert, sodass bei dieser Ausführungsform lediglich eine einpolige Trennung ermöglicht ist. Mit anderen Worten ist der zweite Schalter 40 nicht vorhanden.

Die verbleibenden Anschlüsse 33, bei dieser Ausführungsform die äußeren, sind mittels entsprechender Stromschienen 80 über den ersten Schalter 34 miteinander verbunden, der mittels der hier nicht gezeigten Steuereinheit 38 betätigt ist. Auch hier ist der Stecker 88 vorhanden, der jedoch mittels des Grundkörper 66 teilweise gebildet ist. Dabei befindet sich der Stecker 88 an dem Boden des Grundkörpers 66, und mittels des Steckers 88 sind sowohl die Datenschnittstelle 52, der weitere Stromanschluss 60 sowie der weitere Anschluss 63 bereitgestellt. Zudem ist ein zusätzlicher Stecker 90 vorhanden, der ebenfalls in den Boden des Grundkörpers 66 eingebracht ist, und in den bei Bedarf weitere Bauteile eingesteckt werden können, wie zum Beispiel ein Kondensator. Aufgrund der äußeren Anbindung des Kondensators ist hierbei ein Austausch, beispielsweise bei einer Beschädigung, erleichtert.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebene Einzelmerkmale auch auf andere Weise miteinander kombinierbar, ohne den Gegenstand der Erfindung zu verlassen.

### Bezugszeichenliste

- 2: Fahrzeug
- 4: Rad
- 6: Verbrennungskraftmaschine
- 8: Generator
- 10: Bordnetz
- 12: Hauptschalter
- 13: Anschlussleitung
- 14: Batterie
- 16: sekundäres Bordnetz
- 18: Bordcomputer
- 20: Bussystem
- 22: Anhänger
- 24: Aggregat
- 26: Leitung
- 28: Gehäuse
- 30: erster Hauptstrompfad
- 32: zweiter Hauptstrompfad
- 33: Anschluss
- 34: erster Schalter
- 36: Vorladeschaltung
- 38: Steuereinheit
- 40: zweiter Schalter
- 42: erster Stromsensor
- 44: zweiter Stromsensor
- 46: erster Spannungssensor
- 48: zweiter Spannungssensor
- 50: Entladungsschaltung
- 52: Datenschnittstelle
- 54: USB-Anschluss
- 56: analoger Anschluss
- 58: digitaler Anschluss
- 60: weiterer Stromanschluss
- 62: Gleichspannungswandler
- 63: weiterer Anschluss
- 64: Interlock-System
- 66: Grundkörper
- 67: Kühlrippe
- 68: Deckel
- 70: Lasche
- 72: Öffnung
- 74: Aussparung
- 76: Kunststoffkörper
- 78: Modul
- 80: Stromschiene
- 82: Isolierkörper
- 84: Bolzen
- 86: Kabelschuh
- 88: Stecker
- 90: zusätzlicher Stecker
- 92: Kühlkörper
- 94: Thermobrücke

## Patentansprüche

1. Hauptschalter (12) eines Bordnetzes (10) eines Fahrzeugs (2), insbesondere Landmaschine, mit einem ersten Hauptstrompfad (30), in den ein erster Schalter (34) eingebracht ist, und mit einem zweiten Hauptstrompfad (32), sowie mit einer Steuereinheit (38), wobei dem ersten Hauptstrompfad (30) ein erster Stromsensor (42) und dem zweiten Hauptstrompfad (32) ein zweiter Stromsensor (44) zugeordnet ist, und wobei mittels der Steuereinheit (38) der erste Schalter (34) in Abhängigkeit einer Abweichung von mittels der beiden Stromsensoren (42, 44) erfassten elektrischen Ströme betätigt ist.

2. Hauptschalter (12) nach Anspruch 1,
**dadurch gekennzeichnet,**
**dass** der erste Schalter (34) mittels einer Vorladeschaltung (36) überbrückt ist.

3. Hauptschalter (12) nach Anspruch 1 oder 2,
**gekennzeichnet durch**
eine Entladungsschaltung (50), die gegen einen der Hauptstrompfade (30, 32) geführt ist.

4. Hauptschalter (12) nach einem der Ansprüche 1 bis 3,
**dadurch gekennzeichnet,**
**dass** in den zweiten Hauptstrompfad (32) ein zweiter Schalter (40) eingebracht ist, der mittels der Steuereinheit (38) betätigt ist.

5. Hauptschalter (12) nach einem der Ansprüche 1 bis 4,
**gekennzeichnet durch**
einen weiteren Stromanschluss (60) über den die Steuereinheit (38) bestromt ist.

6. Hauptschalter (12) nach Anspruch 5,
**dadurch gekennzeichnet,**
**dass** zwischen den weiteren Stromanschluss (60) und die Steuereinheit (38) ein Gleichspannungswandler (62) geschaltet ist.

7. Hauptschalter (12) nach einem der Ansprüche 1 bis 6,
**gekennzeichnet durch**
eine Datenschnittstelle (52), die signaltechnisch mit der Steuereinheit (38) verbunden ist.

8. Hauptschalter (12) nach einem der Ansprüche 1 bis 7,
**gekennzeichnet durch**
ein Gehäuse (28), innerhalb dessen der erste Schalter (34), die Steuereinheit (38) und die Stromsensoren (42, 44) angeordnet sind, wobei die beiden Hauptstrompfade (30, 32) sich zwischen jeweils zwei Anschlüssen (33) erstrecken, die sich außerhalb des Gehäuses (28) befinden.

9. Hauptschalter (12) nach Anspruch 8,
**dadurch gekennzeichnet,**
**dass** das Gehäuse (28) einen schachtelartigen Grundkörper (44) mit einer Aussparung (74) aufweist, in die ein Kunststoffkörper (76) eingesetzt ist, an dem die Anschlüsse (33) des ersten Hauptstrompfads (30) und der erste Schalter (34) befestigt sind.
